# EUROPEAN PATENT SPECIFICATION

(11) **EP 2 411 418 B1**
(45) Date of publication and mention of the grant of the patent: **12.09.2018**
(21) Application number: 10715346.2
(22) Date of filing: 19.03.2010
(51) Int. Cl.: C08B 37/00

(54) **PROCESS FOR THE PREPARATION OF AGAROSE POLYMER FROM SEAWEED EXTRACTIVE**
VERFAHREN ZUR HERSTELLUNG VON AGAROSE AUS ALGENEXTRAKT
PROCEDE DE PREPARATION D'AGAROSE À PARTIR D'EXTRAIT D'ALGUES

(30) Priority: 24.03.2009 IN DE05672009
(43) Date of publication of application: 01.02.2012
(73) Proprietor: Council of Scientific & Industrial Research, New Delhi 110 001 (IN)
(72) Inventor: MEENA, Ramavatar, Gujarat (IN); PRASAD, Kamalesh, Gujarat (IN); SIDDHANTA, Arup, Kumar, Gujarat (IN); GHOSH, Pushpito, Kumar, Gujarat (IN); MEHTA, Gauravkumar, Kishor, Gujarat (IN); RAMAVAT, Bharatkumar, Kalidas, Gujarat (IN); GANESAN, Meenakshi, Sundaram, Gujarat (IN); JHA, Bhavanath, Gujarat (IN); MISHRA, Avinash, Gujarat (IN); GANDHI, Mahesh, Ramniklal, Gujarat (IN); AGARWAL, Pradeep, Kumar, Gujarat (IN); ESWARAN, Karuppanan, Gujarat (IN)
(74) Representative: Cornish, Kristina Victoria Joy
(86) International application number: PCT/IB2010/000588
(87) International publication number: WO 2010/109289

(56) References cited:
- EP-A2- 0 304 024
- GB-A- 1 006 259
- GB-A- 2 296 249
- US-A- 3 753 972
- US-A- 3 901 873
- US-A1- 2005 267 296

## Description

### FIELD OF THE INVENTION

The invention relates to an improved process of isolation of agarose from extractives of *Gracilaria* and *Gelidiella* spp. and more particularly extractives of the seaweeds, *Gracilaria dura* and *Gelidiella acerosa* of Indian waters which were obtained from the Gujarat and Tamil Nadu coasts.

### BACKGROUND OF THE INVENTION

Reference may be made to Selby & Wynne (in R. L. Whistler (ed.): Polysaccharides and Their Derivatives, 2nd ed., Academic Press, New York 1973, pp. 29-48) wherein it has been stated that most commercial agars are produced by hot water extraction. Other methods are possible, such as an extraction with glycerol, anhydrous ammonia, or other solvents, but the traditional process employing hot water is the most recommended (www.marinalg.org). The agar extraction procedures vary according to the treated seaweed variety. They generally follow the three stages of (1) extraction (2) purification (3) dehydration, as described below: First, the seaweeds are carefully washed with water in order to eliminate marine salt and foreign matter such as sand. The extraction is made by hot water under pressure or in open tank if the seaweeds have undergone an alkaline treatment. This latter process is mainly applied to *Gracilaria* seaweed in order to lower the sulfate content in the resultant agar. The extraction juice, composed of 99% water and 1% agar, is filtered under hot conditions and then cooled to room temperature. The resulting gel is dehydrated under mechanical pressure or by freezing-thawing. In pressure dehydration a pressure of 49-98 N/cm² is applied to press the gel through intercalated filters. Water passes the filters and the agar molecules are retained as filter cake. Gel freezing is carried out at -18 °C. At that temperature the agar molecules are excluded selectively from the ice network and form strips. The thawing step melts the ice and agar strips are recovered selectively. These two operations of dehydration taken individually remove about 70% of the initial water content. A part of the residual moisture is then eliminated by drying with hot air. The dry agar flakes are ground to prepare a final product in powder form with different mesh sizes.

Reference may be made to the patent by Lebbar Thami, Lebbar Rachid and Riad Abdelwahab (US Patent 5,496,936) wherein processing of agar-agar is described, agar-agar have been extracted from seaweed in an extraction step and then dehydrated in a dehydrating step to form an agar-agar gel or powder, where dehydration was done by freeze-thawing or mechanical pressing or by passing through a single-screw or twin screw extruder. This process suffers from the drawback of using energy-intensive process of freeze thawing or otherwise the cumbersome processes of mechanical pressing requiring sophisticated hardware.

Reference may be made to the patent by D. Du, Z. Zhuang and C. Zhuang (CN1587284-A, March 2, 2005; CN1296390-C, January 24, 2007) wherein agar was produced following a "production process including soaking, neutralization, bleaching, and gelatin extraction. The material is soaked in low concentration alkali solution at high temperature and pressurized condition, and through subsequent filtering, water washing, pH regulation with acid, bleaching with sodium hypochlorite, adding assistant, boiling to extract gelatin, press filtering to dewater and drying, agar is obtained". The disadvantage of this process lies in the fact that it used "press filtering to dewater and dry agar" which requires sophisticated hardware.

Reference may be made to the Sigma Catalog (2006-2007; pages 269-270) wherein it is stated that "Agarose is a purified linear galactan hydrocolloid isolated from agar or agar bearing marine algae. Agarose forms a gel matrix that is nearly ideal for diffusion and electrokinetic movements of biopolymers. Therefore, it is useful for electrophoresis, immunoelectrophoresis and immunodiffusion." It is further mentioned therein that the various grades of agaroses have sulfate content ranging from 0.10 to 0.35% which are suitable for applications in molecular biology, protein electrophoresis and cell culture. Reference may be made to several reports wherein it has been stated that agarose is a purified linear galactan hydrocolloid, isolated from agar or recovered directly from agar-bearing marine algae, such as the Rhodophyta. Genera from which agarose is extracted include Gelidium, Gracilaria, Acanthopeltis, Ceramium, Pterocladia, and Campylaephora. Grabar (1957), has reported that agar is extracted from red algae by boiling in water and is then isolated by filtering off the particulates, gelling and freeze-thawing the colloid to remove water-soluble impurities, and precipitation with ethanol (Methods Biochem. Anal. 7 (1957) 1-38). The resultant product is a mixture of polysaccharides, which are alternating copolymers of 1,4-linked 3,6-anhydro-α-L-galactose and 1,3-linked β-D-galactose. The repeating disaccharide is referred to as agarobiose (Araki, Proceedings 5th International Seaweed Symposium, Halifax, 1965, pp. 3-17). Of course, this is an idealized structure, since even purified agarose contains appreciable amounts of the following substituents: sulfate, pyruvate, and methoxyl groups. Sulfate is generally esterified to the hydroxyl at C-4 of β-D-galactopyranose, and C-2 and C-6 of 3, 6-anhydro-α-L-galactose. Pyruvate is linked to both C-4 and C-6 of some residues of β-D-galactopyranose. The resulting compound is referred to as 4,6-*O-*carboxyethylidene by Duckworth and Yaphe (Carbohydr. Res. 16, 1971, 189-197).

Reference may be made to "Isolation of partially purified agarose with a quaternary base" by Craigie and Leigh (in Handbook of Phycological Methods, edited by J A Hellebust and J S Craigie, Cambridge University Press, Cambridge, 1978; pp. 126) where 250 mg of crude agar was dissolved in 100 ml of boiling distilled water. 25 mg of lambda-carrageenan was added and 10 ml 2% Cetavlon (cetylpyridinium chloride) was added at 80-100°C solution. The hot extractive was filtered with Celite and pressure filtered over membrane (0.8 micron) followed by freezing and thawing of the product to have partially purified agarose, but the drawback of this process is that agarose polymer was separated from the hot extractive by freeze-thaw process, which is energy intensive.

Reference may be made to the website www.ncbi.nlm.nih.gov of National Centre for Biological Information (NCBI), USA, wherein the seaweed *Gracilaria dura* of Indian waters, which has been used in the present invention, has gene bank accession No. DQ399795 for 18S ribosomal RNA gene.

Reference may be made to Siddhanta, A. K., et al. (PCT2005/118830*;* US 20050267296 A1) wherein the prior art of preparation of agar and agarose by different methods is covered. The inventors further disclose an improved process for the preparation of agarose of high gel strength and low gelling temperature from *Gracilaria dura,* said process comprising steps of pre-treating the dry seaweed with alkali; rinsing the pre-treated seaweed until the washing shows a pH ranging between 7 and 8; adding water and autoclaving to obtain extractive; treating the hot extractive with charcoal and Celite to obtain hot extractive; vacuum-filtering the hot extractive over a Celite bed; freezing the filtrate into a mass and thawing the mass; redissolving the mass in water by heating in an autoclave, repeating the freeze-thaw cycle, straining the product to remove thawed liquid and thereafter squeezing to expel residual liquid to the extent possible to obtain agarose, and an agarose thereof, the drawback of this process is that the hot extract is cooled below -15°C for 15 h, which is very time consuming and energy intensive. Moreover, the repetition of the freeze-thaw cycle in this process makes it more cost-sensitive. Reference may also be made from the paper of Meena, et al. (Carbohydrate Polymers 69:179-188, 2007) wherein the same agarose has been characterized and its performance compared with that of commercially available agarose.

Reference may be made to "Purification of agar" by Kiyoshi Arai et al. (JP 7017,130, January 13, 1970; Chemical Abstr. 74, 32889r, 1971) wherein it is reported that crude agar was extracted with dimethyl formamide (DMF) to separate high purity agarose. 10 g Agar mixed with 500 ml DMF with stirring, dipped 10 h in hot water, centrifuged, the supernatant poured into 2 liter acetone, and the precipitates are passed through a glass filter, washed with 500 ml acetone, dissolved in hot water and filtered to give agarose powder.

Reference may be made to "Agarose purification method using glycol" by R. B. Provonchee (US 4,990,611, February 1991) where purified agarose was recovered from agar or impure agarose by dissolving the agar or agarose in a lower alkylene glycol wherein sufficient agar or agarose was dissolved in the glycol to form a glycol solution containing at least about 0.1 wt % agar or agarose, at elevated temperature, cooling the agar or agarose-containing glycol solution to induce precipitation of a purified agarose product, and recovering the precipitated agarose product.

Reference may also be made to US Patent No. 4,983,268 by Kirkpatrick et al. that describes the preparation of purified agarose suitable for rapid electrophoresis, characterized by a sulfate content less than 0.2 wt % and gel strength of at least 1200 g/cm² (1%). Agarose is purified by dissolving agarose or alkali-modified agar in an aqueous medium buffered at pH 6.0 to 8.0 and containing no more than 2.0 nM salt as chloride, and precipitating the agarose by contact with lower alkanol as follows: "The agarose was again filtered off, then resuspended in water to a total weight of 1000 g, and dissolved by boiling, thus forming a 2% solution. It was cooled to 74°C and mixed with two liters of azeotropic isopropyl alcohol (IPA) (87.7% by weight IPA)".

Reference may also be made to the work of Alfred Polson (Chemical Abstract 65: p5865a; 1965) wherein fractionation of mixture of agarose and agaropectin has been described for preparation of agarose. The mixture is treated with an aqueous solution of polyethylene glycol of molecular weight 300, giving a precipitate enriched in agarose. In this process 80g of Ion agar No. 2 was dissolved in 2 liter of water. To the hot solution (80°C) was added 2 liters of 40% (wt/vol) polyethylene glycol of molecular weight 6000 and the resultant precipitate separated by filtration through 110 mesh nylon cloth. The precipitate was then washed at 40°C for 2-3 minutes, suspended in water at 15°C, stirred overnight in 5 liters of water, collected in nylon mesh, washed with acetone and dried in warm air.

Reference may be made to the paper by Prasad et al. (Int. J. Biol. Macromol. 35, 135-144, 2005) wherein it is reported that ionic and non-ionic surfactants modify the rheological and thermal properties of agar sol and gel in different ways. The paper also describes other prior art wherein surfactants are employed.

Besides the use of large amounts of multiple organic solvents the problem of energy intensive agar isolation from seaweed extractive remains in the above prior art. However, neither the above paper nor any other prior art discloses the utility of surfactants for precipitating out agarose from aqueous seaweed extractive under ambient conditions without use of any organic solvent, which is the main object of the present invention.

It is evident from the prior art that agar/agarose is isolated from aqueous seaweed extractive by freeze-thaw process and in other cases by pressure syneresis. The products are subsequently purified through solvent precipitation or chromatographic fractionation. The processes followed for isolation of the product from the extractive are, therefore, highly energy intensive or require sophisticated hardware and it is desirable to identify an improved process of isolation of the product from the extractive.

### OBJECTS OF THE INVENTION

The main object of the present invention is to devise an improved process of isolation of agarose from dilute aqueous extracts of *Gracilaria* and/or *Gelidiella* species of seaweed that dispenses with the need for freeze-thawing or mechanical pressing or adding large amounts of solvent into the extractive. Another object of the present invention is to induce coagulation of agarose from the aqueous extractive using non-ionic surfactants as coagulants.

Another object of the present invention is to demonstrate that the process of coagulation is particularly effective with agarose, which typically has ≤0.3 % (w/w) sulphate.

Another object of the present invention is to utilise extractives from *Gracilaria dura* and *Gelidiella acerosa* for the above purpose.

Another object of the present invention is to treat the seaweeds with alkali to reduce the sulphate content of the agar/agarose and make it amenable to coagulation by the method of the present invention besides increasing its gel strength as disclosed in the prior art. Another object is to centrifuge the hot extractive to remove all suspended matter prior to addition of surfactant.

Another object of the present invention is to remove residual surfactant in the coagulated agarose simply by washing the product with water.

Another object is to make the agarose readily dispersible.

Another object is to achieve such easy dispensability by redissolving the product in hot water to a concentration of up to 7 % (w/v) and treating the solution with isopropyl alcohol to obtain the desired product with minimum use of solvent.

Another object is to recycle and reuse the solvent and the surfactant.

Another object is to demonstrate that the agarose of the present invention is similar to the agarose obtained by the method of the prior art.

### SUMMARY OF THE INVENTION

The present invention relates to an improved process of obtaining agarose from dilute seaweed extractives prepared from *Gracilaria* and *Gelidiella* species according to claim 1. The seaweeds are(i) treated with alkali to reduce sulphate content, (ii) washed with water to remove alkali and then (iii) cooked in water to prepare dilute extractive. The material is then (iv) homogenized and (v) centrifuged under hot condition to get clear seaweed extractive free from insoluble impurities. The hot extractive is then (vi) treated with a water-soluble non-ionic surfactant under vigorous stirring and (vii) the contents left standing to cool to room temperature upon which agarose precipitates out, which is then (viii) separated by centrifugation and (ix) washed with water to remove adhering surfactant. Then, (x) the wet agarose mass is redispersed under hot condition in minimum volume of water and (xi) treated with equal volume of isopropyl alcohol to dehydrate the agarose mass, which on (xii) filtration and drying yields a refined and readily dispersible product suitable for DNA gel electrophoresis.

Accordingly, the present invention provides an improved process for the purification of agarose from aqueous extracts of *Gracilaria* and/or *Gelidiella* species of seaweed using surface active agents selected from non-ionic surfactants octyl phenol ethoxylate and nonyl phenol ethoxylate, the said process comprising the steps of:
(a) centrifuging the alkali-treated hot seaweed extractive (70-80°C) at 10000 - 14000 rpm for 5-15 minutes;
(b) mixing the hot seaweed extractive as obtained in step (a) with 2-5% surface active agents at a temperature in the range 60-100°C under continuous stirring;
(c) allowing the contents as obtained in step (b) to stand for 1-10 hours at a temperature in the range of 25-35°C to precipitate out solid mass of agarose;
(d) decanting the supernatant liquid and washing the said mass with water to remove residual surface active agents in the solid;
(e) redissolving the wet mass obtained in step (d) in minimum quantity of water in the range of 7 to 10% w/w agarose product and treating with minimum quantity of iso-propanol wherein agarose sol to iso-propanol ratio being 1:0.5 to 1:1.5 w/w to precipitate out the agarose;
(f) isolating the solid product and drying in a suitable drier to obtain agarose powder having mesh size in the range of 200 to 300.

### BRIEF DESCRIPTION OF FIGURES

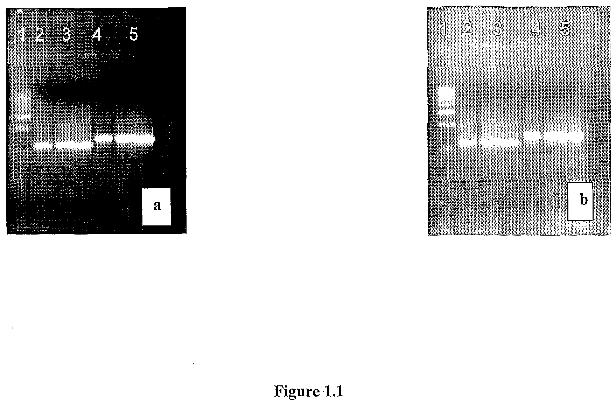

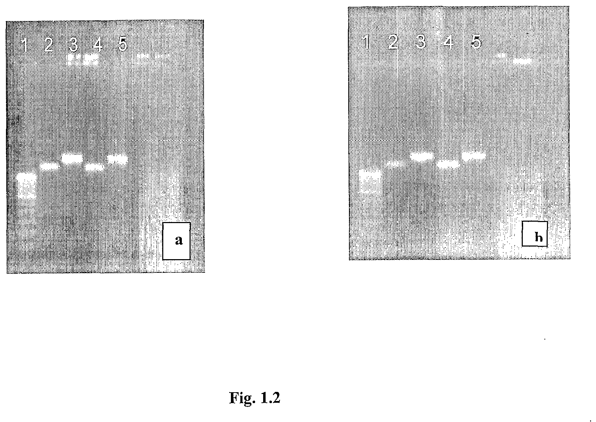

**Fig. 1.1** Represents the DNA gel electrophoresis of PCR amplified product on *Gracilaria dura* agarose gel samples. The agarose gel sample of the present invention is indicated by Fig 1.1a, while the agarose gel samples of the previous (PCT 2005/118830; US 2005/0267296 A1) inventions are shown with the help of Fig 1.1b. The figures a & b consists of similar lanes, these are:
   **Lane 1:** 1kb ladder
   **Lane 2, 3:** PCR product of 1.2 kb
   **Lane 4, 5:** PCR product of 1.4 kb
**Fig. 1.2** Deals with the gel electrophoresis of DNA eluted from the gels of Fig. 1.1, on *Gracilaria dura* agarose gel samples. The agarose gel sample of the present invention is represented by Fig 1.2a, while the agarose gel samples of the previous (PCT 2005/118830; US 2005/0267296 A1) inventions are indicated by Fig. 1.2b. The figures a & b consists of similar lanes, these are:
   **Lane 1:** 100bp ladder
   **Lane 2:** eluted 1.2 kb product from gel (1.1b)
   **Lane 3:** eluted 1.4 kb product from gel (1.1b)
   **Lane 4:** eluted 1.2 kb product from gel (1.1a)
   **Lane 5:** eluted 1.4 kb product from gel (1.1a)

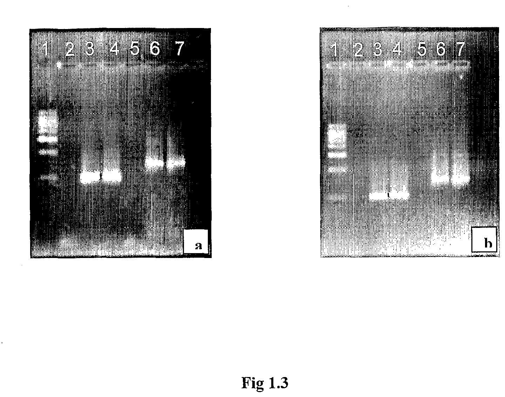

**Fig. 1.3****:** Represents the gel electrophoresis of PCR amplified product, using eluted product as template (obtained from Fig. 1.1), on *Gracilaria dura* agarose gel samples. The agarose gel sample of the present invention is shown as Fig 1.3a, while the agarose gel samples of the previous (PCT 2005/118830; US 2005/0267296 A1) inventions arc indicated by Fig. 1.3b. The figures a & b consists of similar lanes, these are:
   Lane 1: 1kb ladder
   **Lane 2:** -ve control
   **Lane 3, 4:** PCR product 1.0 kb from gel (1.1b) and (1.1a) eluted product
   **Lane 5:** -ve product
   **Lane 6, 7:** PCR product 1.4 kb from gel (1.1b) and (1.1a) eluted product

### DETAILED DESCRIPTION OF THE INVENTION

The present invention relates to a novel, direct and cost-effective process for the preparation of agarose of high gel strength having high and low gelling temperatures from *Gracilaria* and *Gelidiella* spp. more particularly *Gracilaria dura* and *Gelidella acerosa,* said process comprising steps of pre-treating (i) the dry seaweeds with alkali to reduce sulphate content, (ii) washed with water to remove alkali and then (iii) cookcd in water to prepare dilute extractive. The material is then (iv) homogenized and (v) centrifuged under hot condition to get clear seaweed extractive free from insoluble impurities. The hot extractive is then (vi) treated with a water-soluble non-ionic surfactant under vigorous stirring and (vii) the contents left standing to cool to room temperature upon which agarose precipitates out, which is then (viii) separated by centrifugation and (ix) washed with water to remove adhering surfactant. Then, (x) the wet agarose mass is redispersed under hot condition in minimum volume of water and (xi) treated with equal volume of isopropyl alcohol to dehydrate the agarose mass, which on (xii) filtration and drying yields a refined and readily dispersible product suitable for DNA gel electrophoresis. Further, the quality of agarose obtained is capable of being stored in plastic containers at least up to 1 year without any deterioration.

The present invention describes an "Improved process for the preparation of agarose polymer from seaweed extractive", the agarose polymer having high end applications, high gel strengths, having low and high gelling temperatures from *Gracilaria dura* and *Gelidiella acerosa* respectively, by a novel process which involves (i) pre-treating 35 parts for *Gracilaria* and 20 parts for *Gelidiella* spp., respectively (v/w) with aqueous alkali in the concentration range of 1 to 15% alkali at a temperature in the range of 25 - 95°C and for a period in the range of 0.5 to 5.0 hours,
(ii) rinsing the pre-treated seaweed thoroughly with water to remove excess alkali until the washing shows a pH in the range of 7 and 9,
(iii) adding about 35 parts for *Gracilaria* and 20 parts for *Gelidiella* spp., respectively (v/w) of water for every one part of original seaweed and autoclaving in the range of 100-125°C for time duration in the range of 1.0 to 2.5 hours to obtain extractive,
(iv) homogenized the hot extractive prior to centrifugation,
(v) centrifuging the hot extractive at 10,000 to 14,000 rpm for 5 to 15 min.,
(vi) treating the extractive with about 2 to 5% surface active agents under continuous stirring at a temperature in the range of 60 and 100°C,
(vii) keeping the extractive with surface active agent at ambient temperature (25-35°C) to allow the solid mass to coagulate from the seaweed extractive over a period in the range of 1 to 10 h,
(viii) separating solid mass of agarose from the liquid by centrifugation,
(ix) residual surface active agent removed by simple washing or by using dialysis until the final washing showed surface tension similar to water,
(x) optionally redissolving the wet mass in minimum quantity of water in the range of 7 to 10% (w/w),
(xi) dewatering it in minimum quantity of iso-propanol in the range of 50 to 150 g IPA, for 100 g of agarose dispersion, and
(xii) filtering, drying and ground to obtain readily dispersible agarose product suitable for DNA gel electrophoresis.

Gel strength of agarose product of present invention was measured on a Nikkansui type gel tester in 1.0% and 1.5% agarose gels at 20°C. Thermogravimetric analysis (TGA) was carried out on a STAR-Toledo TGA machine, Switzerland. Molecular weight determination was done measuring intrinsic viscosity on an Ostwald Viscometer (cf. C. Rochas and M. Lahaye. Carbohydrate Polymers 1989, 10:289). Gelling and melting temperatures were measured following the method described by Craigie et al. (Hand Book of Phycological Methods, 1978 (Eds. Hellebust. J A and Craigie J S, Cambridge University Press); pp.127), ash content was measured by incinerating the solid at 800°C. for 6 h, sulphate content was estimated by treating the ash with concentrated nitric acid, evaporating to dryness, dissolving the residue in water, filtering, and subjecting to inductively coupled plasma-optical emission spectroscopy (ICP-OES) analysis for sulphur.

In an embodiment of the present invention, the agarose may be obtained from *Gracilaria* and *Gelidiella* spp. and more particularly *Gracilaria dura* and *Gelidella acerosa* of Indian waters which were obtained from the Gujarat and Tamil Nadu coasts.

In another embodiment of the present invention, steps i-iv are carried out as practiced in the prior art.

In still another embodiment of the present invention, the surface active agents may be added in to the hot extractive in the temperature range of 60 to 90°C and more specifically 70-80°C and centrifuging the hot extractive at 10,000 to 14,000 rpm for 5 to 15 minutes.

In yet another embodiment of the present invention, the surface active agents may be added in to the hot extractive in the range of 2% to 5% (w/w) and more specifically 3% (w/w) under continuous stirring at a temperature in the range of 60-100°C.

In still another embodiment of the present invention, the agarose polymer may be coagulated on standing of the surfactant-containing extractive at ambient temperature (25-35°C) for 1-10 h and more specifically 3-4 h.

In yet another embodiment of the present invention, the crude agarose after precipitation may be separating by centrifugation at ambient temperature.

In still another embodiment of the present invention, residual surfactant in the crude agarose may be removed by simple water washing or by subjecting redispersed crude agarose to dialysis.

In another embodiment of the present invention, the wet agarose mass is redispersed in hot water (120°C) while maintaining the concentration of agarose in the range of 7% to 10% and more specifically 7%.

In yet another embodiment of the present invention, the concentrated agarose mass is treated with equal volume of isopropanol to dehydration of agarose mass and easy dispersion.

In still another embodiment of the present invention, the solid product isolation and drying was done in a suitable drier to obtain agarose powder having mesh size in the range of 200 to 300.

In yet another embodiment of the present invention, the extractive was prepared by known method comprising the steps of treating the dry seaweed with 20-35 parts (w/w) of 1-15% (w/w) aqueous sodium hydroxide solution at 25-95°C for 0.5-5 hours followed by washing to adjust pH in the range of 7-9, then adding demineralized water to the washed seaweed and autoclaving at a temperature ranging between 100-125°C for 1-2.5 hours. In still another embodiment of the present invention, the surface active agents used arc water soluble non-ionic surfactants and more particularly Triton X-100 and Synperonic 91/6.

In still another embodiment of the present invention, wherein the number of washing operations may be in the range of 5 to 20 more specifically 6 to 10 operations, and the time duration of washing may be in the range of 10-30 minutes for each washing operation.

In yet another embodiment of the present invention, other polysaccharides may be used when the sulphate and ash contents are similar or below 0.3% and 1.0% respectively, and that would be amenable to this process.

In another embodiment of the present invention, the sulphate content of agarose in the hot extractive may be in the range of 0.20% to 0.25%, for *Gracilaria* and *Gelidiella* seaweeds, respectively.

In yet another embodiment of the present invention, the used surface active agents induces flocculation only when the level of sulphate in agarose is <1% (w/w), preferably <0.5% (w/w) and still more preferably <0.25%.

In yet another embodiment of the present invention, the polysaccharides may be chemically or biochemically desulphated to have the sulphated content around or below 0.3%.

In still another embodiment of the present invention, agarose polymers may be isolated from the seaweed extractive was suitable for agarose gel electrophoresis of DNA exhibiting satisfactory resolution performance in lower concentrations e.g. ≤0.8% concentration.

In yet another embodiment of the present invention, the quality and quantity of DNA was similar after recovering from the agarose gels.

In yet another embodiment of the present invention, the separation of DNA segments was good in agarose gels prepared from the agarose obtained in the present invention.

In further embodiment of the present invention, the quality of agarose obtained is capable of being stored in plastic containers at least up to 1 year without any deterioration.

The following examples are given by way of illustration and, therefore, should not be construed to limit the scope of the present invention. Examples 1-6 in this invention follow the freeze thaw process as mentioned in the prior art. But the main object of the invention resides in examples 7 to 11, which does not use freeze thaw process.

### EXAMPLE 1

*Gracilaria dura* (25 g) seaweed was soaked in tap water for 1 h at 35°C and then soaked at 85°C without sodium hydroxide (NaOH) for 2 h. The soaked seaweeds were then taken in distilled water (seaweed:water =1:35 w/w) and autoclaved at 120°C for 1.5 h. The extract was homogenized and centrifuged to get the clear extractive from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar was air dried followed by drying in an oven at 50°C for 2 h.
Yield: 6.5 g (26.0%) with respect to bone dry seaweed; gel strength (1% gel): 250 g cm⁻² at 20°C; gelling temperature: 34.0°C; ash: <8.06%; sulphate: ≤3.26%.

### EXAMPLE 2

*Gelidiella acerosa* (25 g) seaweed was soaked in tap water for 1 h at 35°C and then at 85°C without NaOH for 2 h. The soaked seaweeds were then taken in distilled water (seaweed:water =1:35 w/w) and autoclaved at 120°C for 1.5 h. The extract was homogenized and centrifuged to get the clear extractive from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar polymer was air dried followed by drying in an oven at 50°C for 2 h.
Yield: 5.5 g (22.0%) with respect to bone dry seaweed; gel strength (1.5% gel): 300 g cm⁻² at 20° C; gelling temperature: 41.0°C; ash: ≤4.56%; sulphate: <2.60%.

### EXAMPLE 3

*Gracilaria edulis* (25 g) seaweed was soaked in tap water for 1 h at 35°C and then at 85°C without NaOH for 2 h. The soaked seaweeds were then taken in distilled water (seaweed:water =1:35 w/w) and autoclaved at 120°C for 1.5 h. The extract was homogenized and centrifuged to get the clear extractive from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar polymer was air dried followed by drying in an oven at 50°C for 2 h.
Yield: 5.0 g (20.0%) with respect to bone dry seaweed; gel strength (1.5% gel): <100 g em⁻² at 20°C; gelling temperature: 40.0°C; ash: ≤6.56%; sulphate: ≤5.60%.

### EXAMPLE 4

*Gracilaria dura* and *Gelidiella acerosa* (25 g each) seaweeds of Examples 1 and 2 were soaked in tap water in separate experiments for 1 h at 35°C; the washings were discarded and the wet seaweeds were treated with 2% NaOH at 85°C for 2 h followed by washing the seaweed with water to remove excess alkali. The pre-treated seaweeds were then taken in distilled water (seaweed: water = 1:35 or 1:20 w/w) and autoclaved at 120°C for 1.5 h. The extracts of *Gracilaria dura* and *Gelidiella acerosa* were homogenized and centrifuged to get the clear extractives free from the water insoluble impurities, having sulphate contents ≤1.87%, and ≤1.76%, respectively. These extractives were treated with two non-ionic [Triton X-100 (S. D. Fine Chemicals, India); Synperonic 91/6 (ICI Uniqema, India)] surfactants (3% w/w with respect to the extractive). The surfactant was added gradually in neat form under vigorous stirring. After completion of addition of the surfactant stirring was discontinued and the contents were allowed to stand at room temperature for 5 h. No precipitation was observed in any of the cases.
**Agorse of *Gracilaria dura:* Yield: 18%; gel strength: 530 g cm-²; sulphate: ≤1.87%.**
**Agorse of *Gelidiella acerosa:* Yield: 14%; gel strength: 850 g cm-²; sulphate: ≤1.76%.**

### EXAMPLE 5

*Gracilaria dura* and *Gelidiella acerosa* seaweeds of Examples 1 and 2 were soaked in tap water in separate experiments for 1 h at 35°C; the washings were discarded and the wet seaweeds were treated with 3.5% NaOH at 85°C for 2 h followed by washing the seaweed with water to remove excess alkali. The pre-treated seaweeds with 3.5% NaOH were then taken in distilled water (seaweed: water =1:35 or 1:20 w/w) and autoclaved at 120°C for 1.5 h. The extracts of *Gracilaria dura* and *Gelidiella acerosa* were homogenized and centrifuged to get the clear extractives free from the water insoluble impurities, having sulphate contents ≤1.22%, and ≤1.47%, respectively. These extractives were treated with two non-ionic [Triton X-100 (S. D. Fine Chemicals, India); Synperonic 91/6 (ICI Uniqema, India)] surfactants (3% w/w with respect to the extractive). The surfactant was added gradually in neat form under vigorous stirring. After completion of addition of the surfactant stirring was discontinued and the contents were allowed to stand at room temperature for 5 h. No precipitation was observed in any of the cases.
**Agarose of *Gracilaria dura:* Yield: 16%; gel strength: 820 g cm-²; sulphate: ≤1.02%.**
**Agarose of *Gelidiella acerosa:* Yield: 14%; gel strength: 980 g cm-²; sulphate:≤1.47%.**

### EXAMPLE 6

*Gracilaria dura* and *Gelidiella acerosa* seaweeds of Examples 1 and 2, in separate experiments, were soaked in tap water for 1 h at 35°C; the washings were discarded and the wet seaweeds were treated with 4% NaOH at 85°C for 2 h followed by washing the seaweed with water to remove excess alkali. The pre-treated seaweeds with 4% NaOH were then taken in distilled water (seaweed: water =1:35 or 1:20 w/w) and autoclaved at 120°C for 1.5 h. The extracts of *Gracilaria dura* and *Gelidiella acerosa* were homogenized and centrifuged to get the clear extractives free from the water insoluble impurities, having sulphate contents ≤0.72%, and ≤1.38%, respectively. These extractives were treated with two non-ionic [Triton X-100 (S. D. Fine Chemicals, India); Synperonic 91/6 (ICI Uniqema, India)] surfactants (3% w/w with respect to the extractive). The surfactant was added gradually in neat form under vigorous stirring. After completion of addition of the surfactant stirring was discontinued and the contents were allowed to stand at room temperature for 5 h. Precipitation was observed with non-ionic surfactants in the extractives prepared from *Gracilaria dura,* containing ≤50.82% sulphate. No precipitation was observed in the extractive prepared from *Gelidiella acerosa,* containing ≤1.38% sulphate, with any of the surfactants mentioned above.
**Agarose of *Gracilaria dura:* Yield: 15%; gel strength: 1300 g cm⁻²; sulphate: ≤0.82%.**
**Agarose of *Gelidiella acerosa:* Yield: 13%; gel strength: 1020 g cm⁻²; sulphate: ≤1.38%.**

**Table 1: Treatment of alkali treated seaweed extractives with cationic, anionic and non-ionic surfactants**

| **Alkali treated Seaweed extractives of Examples 6** | **Surfactant** | **Observation** |
|---|---|---|
| *Gracilaria dura* (Example 6) | CTAB | No precipitation |
| | CPC | " |
| | SLS | " |
| | SC-896 | " |
| | SC-229 | " |
| | Triton X-100 | Complete precipitation at 3% and higher levels |
| | Synperonic 91/6 | " |
| | SC-892 | Complete precipitation at 4 % and higher levels |
| | Tween-80 | " |
| | Atplus 245 | " |

Example 6 leads to the conclusion that non-ionic surfactants are useful in coagulating agarose from hot seaweed extractives, if the sulphate content is ≤0.82% of the polysaccharide, and, therefore, the method of the present invention is ideally applied to the preparation of low sulphated agar or agarose.

### EXAMPLE 7

*Gracilaria dura* and *Gelidiella acerosa* seaweeds of Examples 1 and 2, in separate experiments, were soaked in tap water for 1 h at 35°C; the washings were discarded and the wet seaweeds were treated with 5% NaOH at 85°C for 2 h followed by washing the seaweed with water to remove excess alkali. The pre-treated seaweeds with 5% NaOH were then taken in distilled water (seaweed:water =1:35 w/w) and autoclaved at 120°C for 1.5 h. The extracts were homogenized and centrifuged to get the clear extractives free from the water insoluble impurities, having sulphate contents ≤0.50% and ≤1.08%, respectively. These extractives were treated with two non-ionic [Triton X-100 (S. D. Fine Chemicals, India); Synperonic 91/6 (ICI Uniqema, India)] surfactants (3% w/w with respect to the extractive). The surfactant was added gradually in neat form under vigorous stirring. After completion of addition of the surfactant stirring was discontinued and the contents allowed standing at room temperature for 5 h. Precipitation was observed in the extractives prepared from *Gracilaria dura,* containing 0.5% sulphate. No precipitation was observed in the extractive prepared from *Gelidiella acerosa,* containing 1.08% sulphate.
**Agarose of *Gracilaria dura:* - Yield: 14%; gel strength: 1600 g cm⁻²; sulphate: ≤0.50%.**
**Agarose of *Gelidiella acerosa:* - Yield: 13%; gel strength: 1140 g cm⁻²; sulphate: ≤1.08%.**

**Table 2: Treatment of alkali treated seaweed extractives with cationic, anionic and non-ionic surfactants**

| **Alkali treated Seaweed extractives of Examples 7** | **Surfactant** | **Observation** |
|---|---|---|
| *Gracilaria dura* (Example 7) | CTAB | No precipitation |
| | CPC | " |
| | SLS | " |
| | SC-896 | " |
| | SC-229 | " |
| | Triton X-100 | Complete precipitation at 3% and higher levels |
| | Synperonic 91/6 | " |
| | SC-892 | Complete precipitation at 4 % and higher levels |
| | Tween-80 | " |
| | Atplus 245 | " |
| *Gelidiella acerosa* (Example 7) | CTAB | No precipitation |
| | CPC | " |
| | SLS | " |
| | SC-896 | " |
| | SC-229 | " |
| | Triton X-100 | No precipitation |
| | Synperonic 91/6 | " |
| | SC-892 | No precipitation |
| | Tween-80 | " |
| | Atplus 245 | " |

Example 7 leads to the conclusion that non-ionic surfactants are useful in coagulating agarose completely from hot seaweed extractives, if the sulphate content is ≤0.50%.

### EXAMPLE 8

*Gracilaria dura* and *Gelidiella acerosa* seaweeds of Examples 1 and 2, in separate experiments, were soaked in tap water for 1 h at 35°C; the washings were discarded and the wet seaweeds were treated with 7% NaOH at 85°C for 2 h followed by washing the seaweed with water to remove excess alkali. The pre-treated seaweeds with 5% NaOH were then taken in distilled water (seaweed:water =1:35 w/w) and autoclaved at 120°C for 1.5 h. The extracts were homogenized and centrifuged to get the clear extractives free from the water insoluble impurities, having sulphate contents ≤0.50% and ≤1.08%, respectively. These extractives were treated with two non-ionic [Triton X-100 (S. D. Fine Chemicals, India); Synperonic 91/6 (ICI Uniqema, India)] surfactants (3% w/w with respect to the extractive). The surfactant was added gradually in neat form under vigorous stirring. After completion of addition of the surfactant stirring was discontinued and the contents allowed standing at room temperature for 5 h. Precipitation was observed in the extractives prepared from *Gracilaria dura,* containing 0.5% sulphate. No precipitation was observed in the extractive prepared from *Gelidiella acerosa,* containing 0.80% sulphate.
**Agarose of *Gracilaria dura:* - Yield: 13%; gel strength: 1800 g cm⁻²; sulphate: ≤0.38%.**
**Agarose of *Gelidiella acerosa:* - Yield: 12%; gel strength: 1550 g cm⁻²; sulphate: ≤0.80%.**

**Table 3: Treatment of alkali treated seaweed extractives with cationic, anionic and non-ionic surfactants**

| **Alkali treated Seaweed extractives of Examples 8** | **Surfactant** | **Observation** |
|---|---|---|
| *Gracilaria dura* (Example 8) | CTAB | No precipitation |
| | CPC | " |
| | SLS | " |
| | SC-896 | " |
| | SC-229 | " |
| | Triton X-100 | Complete precipitation at 3% and higher levels |
| | Synperonic 91/6 | " |
| | SC-892 | Complete precipitation at 4 % and higher levels |
| | Tween-80 | " |
| | Atplus 245 | " |
| | CTAB | No precipitation |
| | CPC | " |
| | SLS | " |
| | SC-896 | " |
| *Gelidiella acerosa* (Example 8) | SC-229 | " |
| | Triton X-100 | Complete precipitation at 3% and higher levels |
| | Synperonic 91/6 | " |
| | SC-892 | Complete precipitation at 4% and higher levels |
| | Tween-80 | " |
| | Atplus 245 | " |

Example 8 further leads to the conclusion that non-ionic surfactants are useful in coagulating agarose completely from hot seaweed extractives obtained from *Gelidiella acerosa,* if the sulphate content is ≤0.80%.

### EXAMPLE 9

*Gracilaria dura* (25 g each) seaweed as in example 1 was soaked in tap water for 1 h at 35°C and the water then discarded and the wet seaweed treated with 10% NaOH at 85°C for 2 h followed by washing the seaweed with water to remove excess alkali. The pre-treated seaweeds were then taken in distilled water (seaweed:water =1:35 w/w) and autoclaved at 120°C for 1.5 h. The extract was homogenized and centrifuged to get the clear extractive free from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar polymer was air dried followed by drying in an oven at 50°C for 2 h.
Yield: 5.0 g (20.0%) with respect to bone dry seaweed; gel strength (1.0% gel): >1900 g cm⁻² at 20°C; gelling temperature: 35.0°C; ash: ≤1.0%; sulphate: ≤0.25%.

### EXAMPLE 10

*Gelidiella acerosa* (*G. acerosa*) (25 g) seaweed as in example 2 was soaked in tap water for 1 h at 35°C and the water then discarded and the wet seaweed treated with 10% NaOH at 85°C for 2 h followed by washing the seaweed with water to remove excess alkali. The pre-treated seaweeds were then taken in distilled water (seaweed:water =1:35 w/w) and autoclaved at 120°C for 1.5 h. The extract was homogenized and centrifuged to get the clear extractive free from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar polymer was air dried followed by drying in an oven at 50°C for 2 h.
Yield: 3.5 g (14.0%) with respect to bone dry seaweed; gel strength (1.5% gel): ≥2000 g cm⁻² at 20°C; gelling temperature: 41.0°C; ash: ≤1.1%; sulphate: ≤0.30%.

### EXAMPLE 11

*Gracilaria edulis* (*G. edulis*) (25 g) seaweed as in example 3 was soaked in tap water for 1 h at 35°C and the water then discarded and the wet seaweed treated with 10% NaOH at 85°C for 2 h followed by washing the seaweed with water to remove excess alkali. The pre-treated seaweeds were then taken in distilled water (seaweed:water =1:35 w/w) and autoclaved at 120°C for 1.5 h. The extract was homogenized and centrifuged to get the clear extractive free from the water insoluble impurities. The hot extractive was poured in stainless steel trays and allowed to cool to room temperature. The trays containing the gelled extractive were kept in a refrigerator at -20°C for 20 h. The frozen gel was then thawed at room temperature. The thawed gel was squeezed to remove the adhering liquid thereafter it was washed with demineralized water and finally squeezed to remove adhering water. The native agar polymer was air dried followed by drying in an oven at 50°C for 2 h.
Yield: 3.0 g (12.0%) with respect to bone dry seaweed; gel strength (1.5% gel): ≥400 g cm⁻² at 20°C; gelling temperature: 40.0°C; ash: ≤2.56%; sulphate: ≤1.90%.

### EXAMPLE 12

Hot (70°C) agar extractives of *Gracilaria dura, Gelidiella acerosa* and *Gracilaria edulis* seaweeds as prepared in Examples 1, 2 & 3, and having sulphate content (% w/w) of 3.26, 2.60 and 5.60, respectively, were treated with two cationic [cetyl trimethyl ammonium bromide(CTAB); and cetyl pyridinium chloride (CPC)], three anionic [sodium lauryl sulphate (SLS); SC-896 (ICI Uniqema, India) and SC-229 (ICI Uniqema, India)] and five nonionic [Triton X-100 (S. D. Fine Chemicals, India); Synperonic 91/6 (ICI Uniqema, India); SC-892 (ICI Uniqema, India); Tween-80 (ICI Uniqema); and Atplus 245 (ICI Uniqema, India)] surfactants. The surfactant was added gradually in neat form under vigorous stirring. The concentration of surfactant taken was 3% (w/w) with respect to the extractive. After completion of addition of the surfactant stirring was discontinued and the contents allowed standing at room temperature for 5 h. No precipitation was observed for any of the cases.

### EXAMPLE 13

The experiments of Example 12 were repeated using the hot (70°C) extractives of the alkali-treated seaweeds of Examples 9, 10 & 11 containing agarose with sulphate contents of 0.25, 0.30 and 1.90, respectively. The observations are summarized in Table 4. It can be seen that, whereas the hot extractives of Examples 9 and 10 yielded precipitation with non-ionic surfactants taken in the concentration of 3%, no such precipitation was observed with ionic surfactants in any concentration. Moreover, the extractive of Example 11 did not yield any precipitate even with non-ionic surfactants. Whereas all the non-ionic surfactants induced precipitation with the hot extractives of Examples 9 and 10, Triton X-100 and Synperonic 91/6 yielded complete precipitation at the lower concentration of 3% w/w and were chosen for the further processes of the present invention.

**Table 4: Treatment of alkali treated seaweed extractives with cationic, anionic and non-ionic surfactants**

| **Alkali treated Seaweed extractives of Examples 9-11** | **Surfactant** | **Observation** |
|---|---|---|
| *Gracilaria dura* (Example 9) | CTAB | No precipitation |
| | CPC | " |
| | SLS | " |
| | SC-896 | " |
| | SC-229 | " |
| | Triton X-100 | Complete precipitation at 3% and higher levels |
| | Synperonic 91/6 | " |
| | SC-892 | Complete precipitation at 4 % and higher levels |
| | Tween-80 | " |
| | Atplus 245 | " |
| *Gelidiella acerosa* (Example 10) | CTAB | No precipitation |
| | CPC | " |
| | SLS | " |
| | SC-896 | " |
| | SC-229 | " |
| | Triton X-100 | Complete precipitation at 3% and higher levels |
| | Synperonic 91/6 | " |
| | SC-892 | Complete precipitation at 4 % and higher levels |
| | Tween-80 | " |
| | Atplus 245 | " |
| *Gracilaria edulis* (Example 11) | CTAB | No precipitation |
| | CPC | " |
| | SLS | " |
| | SC-896 | " |
| | SC-229 | " |
| | Triton X-100 | " |
| | Synperonic 91/6 | " |
| | SC-892 | " |
| | Tween-80 | " |
| | Atplus 245 | " |

Examples 12 and 13 lead to the conclusion that non-ionic surfactants are useful in coagulating agarose from hot seaweed extractive, if the sulphate content of the polysaccharide is low as is the case with agarose and, therefore, the method of the present invention is ideally applied to the preparation of agarose.

Example 12 results indicated that the coagulation or precipitation of native agar from the seaweed extractives of *Gracilaria dura, Gelidiella acerosa* and *Gracilaria edulis* did not happen in the presence of ionic and non-ionic surfactants, when the native agars had high sulphate contents above 3 %.

Example 13 (Table 4) shows that the coagulation or precipitation of agarose did not happen in the presence of cationic and anionic surfactants, from the seaweed extractives, obtained from *Gracilaria dura, Gelidiella acerosa,* and *Gracilaria edulis,* even when the sulphate contents in agarose polymer were ca 1%. Example 13 (Table 4) further leads to the conclusion that complete coagulation or precipitation of agarose happens in the presence of non-ionic surfactants, from the seaweed extractives, which were obtained only from alkali treated *Gracilaria dura* and *Gelidiella acerosa,* when the sulphate contents in the agaroses were 0.25 and 0.3% respectively. In the case of seaweed extractive of *Gracilaria edulis,* which had relatively high sulphate content (1.9%) even after alkali treatment, precipitation of the agar polymer did not take place upon addition of non-ionic surfactant. It is concluded that this phenomenon of surfactant (non-ionic)-induced precipitation of agar works well only if the sulphate content of the agar is sufficiently low (<1%).

### EXAMPLE 14

Hot (70°C) agarose extractives of *Gracilaria dura* and *Gelidiella acerosa* seaweeds as prepared in Examples 9 & 10, and having sulphate content (% w/w) of 0.25 and 0.30, respectively, were treated with two non-ionic [Triton X-100 (S. D. Fine Chemicals, India); and Synperonic 91/6 (ICI Uniqema, India)] surfactants. The concentration of surfactant was 3% (w/w) with respect to the extractive. After completion of addition of the surfactant stirring was discontinued and the contents were allowed to stand at room temperature for 5 h. Complete precipitation of agarose polymer took place in the presence of both the non-ionic surfactants. After precipitation of agarose polymer from the extractives, the precipitated polymer was collected by centrifugation. Excess surfactant was removed from the agarose polymer by repeatedly washing with water (6 x 1litre), each washing operation having been carried out by stirring the water-polymer mixture for 15 min or by dialysis after redispersion of the crude agarose mass, separating thereafter the agarose mass by removing the washings through centrifugation. The surfactant free wet agarose mass was redissolved in hot water to yield concentrated solution (7% w/w). This was then treated with isopropyl alcohol in equal amount for dewatering affording easily dispersible agarose.

The specifications of the agarose polymer products obtained from the seaweed extractives of *Gracilaria dura* and *Gelidiella acerosa* after treatment with the non-ionic surfactants Triton X-100 and Synperonic 91/6 are as follows.

Agarose of *Gracilaria dura:* Yield: 3.15 g (14.0%) with respect to bone dry seaweed; gel strength (1% gel): ≥1900 g cm⁻² at 20°C; gelling temperature: 35.0°C; ash: ≤0.80%; sulphate: ≤0.20%.

Agarose of *Gelidiella acerosa:* Yield: 2.47 g (11.0%) with respect to bone dry seaweed; gel strength (1.5% gel): ≥1900 g cm⁻² at 20°C; gelling temperature: 41.0°C; ash: ≤0.95%; sulphate: ≤0.25%.

### EXAMPLE 15

Agarose polymers prepared from *Gracilaria dura* and *Gelidiella acerosa,* in Example 14, were analyzed by Inductively Coupled Plasma (ICP) spectrophotometry on a Perkin-Elmer ICP-OES Optima 2000DV machine, for their metal ion contents following the method described by Wolnik, K.A. (Methods Enzymol., 158:190-205, 1988). The results were compared with the values reported for agarose of Fluka (Cat. No. 05068, 2003/2004) (Table 5). It appeared that the agaroses of this invention would be suitable for electrophoresis work.

**Table 5: Metal ion contents in the agaroses of Gracilaria dura, Gelidiella acerosa and Fluka**

| **Metal ions** | **Agarose of *Gracilaria dura* (Example 14) (ppm)** | **Agarose of *Gelidiella acerosa* (Example 14) (ppm)** | **Agarose (Fluka Cat. No. 05068) (ppm)** |
|---|---|---|---|
| Ca | ≤450 | ≤950 | ≤500 |
| Cd | ND | ND | ≤ 10 |
| Co | ND | ND | ≤10 |
| Cr | ND | ND | ≤ 10 |
| Cu | ≤0.078 | ≤1.0 | ≤10 |
| Fe | ND | ND | ≤10 |
| K | ND | ≤80.0 | ≤500 |
| Mg | ≤124 | ≤452 | ≤10 |
| Mn | ND | ND | ≤10 |
| Na | ≤203 | ≤545 | ≤5000 |
| Ni | ≤0.15 | ND | ≤10 |
| Pb | ND | ND | ≤10 |
| B | ≤1.0 | ≤2.0 | NR |
| As | ND | ND | NR |
| Al | ≤0.34 | ≤0.7 | NR |
| Zn | ≤3.0 | ≤2.0 | ≤10 |

| | | | |
|---|---|---|---|
| **Note: NR = Not reported; ND=Not Detected** | | | |

### EXAMPLE 16

Comparative evaluation of *Gracilaria dura* [gel strength: ≥1900 g cm⁻² in 1% gel] agarose gels of the present invention (Example 14) and previous inventions (PCT 2005/118830; US 2005/0267296 A1) was carried out under identical experimental conditions, the gel concentrations being 0.8% for both the gels in gel electrophoresis. The appropriate amounts of these two agarose samples were dissolved in 50 ml 1x TBE (10.8 gm Tris base, 5.5 gm Boric acid, 0.744 gm Na₂EDTA) buffer using a microwave oven at 90°C. The agarose solutions were cooled down to 60°C and 2 µl of Ethidium bromide (10 mg per ml) solution was added and gels were cast in the gel tray.

DNA ladder and two different DNA samples (1.2kb and 1.5kb) were loaded on both the gels and subjected to electrophoresis using 1xTBE buffer at 50V for 90 min. After running the gel, gel piece containing the DNA was cut from the gel and DNA was extracted using QIA-quick Gel Extraction Kit (Qiagen USA) in 50µl sterilized water. After elution, 5µl DNA was loaded in the freshly cast gel to see the concentration and the quality of the eluted DNA.

The eluted DNA was again amplified by using gene specific primers in the standard PCR conditions (25ng DNA template, 1x Taq polymerase buffer, 150 ng PCR primers, 200µM dNTPs and 2.5 U of Taq Polymerase enzymes in 50µl reaction volume). The PCR conditions were 94°C for 5 min; 55°C for 1 min and 72°C for 1 min for 35 cycles. The PCR amplified DNAs were rechecked by electrophoresis using 0.8 % new and old agarose gels. The gels were visualized under UV light (UV tube 8W, 312 nm; Bangalore Genei, India).

To check the quality and performance of the agarose gel (gel a in Figures 1.1, 1.2 and 1.3) obtained in this invention, DNA gel electrophoresis was conducted and compared with the agarose gel (gel b in Figures 1.1, 1.2 and 1.3) of previous invention (PCT 2005/118830; US 2005/0267296 A1). In Fig. 1.1, PCR amplified DNA was analyzed and DNA products were eluted from these gels and reanalyzed by DNA gel electrophoresis (Fig. 1.2). PCR amplification was done using the DNA product eluted from gels of Fig. 1.1 and quality of amplified DNA products were checked by DNA gel electrophoresis (Fig. 1.3). The separation of DNA samples as well as quality of eluted DNA was found similar in both the gel samples i.e. gel a & b in all the Figures (Figures 1.1, 1.2 & 1.3). Example 16 leads to the conclusion that the process of the present invention yields agarose of similar quality compared to agarose obtained from *Gracilaria dura* by the prior art.

### ADVANTAGES OF PRESENT INVENTION

The main advantage of present invention is that agarose of desirable specifications can be produced from *Gracilaria dura* and *Gelidiella acerosa* of Indian waters through a process that is less capital intensive and more convenient to undertake compared to the prior art and yet gives a product of comparable quality.

Another advantage is that agarose was prepared in more energy efficient manner by dispensing with the freeze thaw operation.

Another advantage is that hot seaweed extractive was clarified by centrifugation which process dispensed with the need for Celite and charcoal as clarifying agents.

Another advantage is that all the non-ionic surfactants used in the present invention are water soluble which enables their easy removal from the product through simple water washing.

Another advantage is that the surface active agent is recyclable.

Another advantage is that the product, after coagulation from extractive and washing, is made more readily water dispersible by preparing a high concentration of aqueous dispersion and precipitating out with minimum quantity of alcohol to obtain product of desired particle size range thereby dispensing with the need for any pulverization. Another advantage is that such refined product was suitable for DNA gel electrophoresis at concentrations lower than required with well known commercial products.

Another advantage is that the quality of agarose obtained is capable of being stored in plastic containers at least up to 1 year without any deterioration

## Claims

1. A process for the purification of agarose from aqueous extracts of *Gracilaria* and/or *Gelidiella* species of seaweed using surface active agents selected from non-ionic surfactants octyl phenol ethoxylate and nonyl phenol ethoxylate, the said process comprising the steps of:
a. centrifuging the alkali-treated hot seaweed extractive (70-8 0°C) at 10000 -14000 rpm for 5-15 minutes;
b. mixing the hot seaweed extractive as obtained in step (a) with 2-5% surface active agents at a temperature in the range 60-100°C under continuous stirring;
c. allowing the contents as obtained in step (b) to stand for 1-10 hours at a temperature in the range of 25-35 °C to precipitate out solid mass of agarose;
d. decanting the supernatant liquid and washing the said mass with water to remove residual surface active agents in the solid;
e. redissolving the wet mass obtained in step (d) in minimum quantity of water in the range of 7 to 10% w/w agarose product and treating with minimum quantity of iso-propanol wherein agarose sol to iso-propanol ratio being 1:0.5 to 1:1.5 w/w to precipitate out the agarose;
f. isolating the solid product and drying in a suitable drier to obtain agarose powder having mesh size in the range of 200 to 300.

2. A process as claimed in claim 1, wherein the seaweed used for preparation of extractive is selected from *Gracilaria dura* and *Gelidiella acerosa* of Indian waters which were obtained from the Gujarat and Tamil Nadu coasts.

3. A process as claimed in claim 1, wherein the extractive was prepared by a method comprising the steps of treating the dry seaweed with 20-35 parts (w/w) of 1-15% (w/w) aqueous sodium hydroxide solution at 25-95°C for 0.5-5 hours followed by washing to adjust pH in the range of 7-9, then adding demineralized water to the washed seaweed and autoclaving at a temperature ranging between 100-125°C for 1-2.5 hours.

4. A process as claimed in claim 1, wherein the washing or dialysis operation in step (d) is performed under ambient conditions till the surface tension of washings was same as that of water.

5. A process as claimed in claim 1, wherein the surface active agent is recycled from spent extractive and washings.

6. A process as claimed in claim 1, wherein the used surface active agents induces flocculation only when the level of sulphate in agarose is <0.82% (w/w)

7. A process as claimed in claim 1, wherein the said process is useful for purifying those polysaccharides which either intrinsically contain low sulphate and or can be chemically or biochemically desulphated to such low level of sulphate content.

## Patentansprüche

1. Verfahren zur Reinigung von Agarose aus wässrigen Extrakten der Algenspezies *Gracilaria* und/oder *Gelidiella* unter Verwendung von oberflächenaktiven Mitteln ausgewählt aus den nichtionischen Tensiden Octylphenolethoxylat und Nonylphenolethoxylat, wobei das Verfahren die Schritte umfasst:
a. Zentrifugieren des alkalibehandelten heißen Algenextrakts (70 bis 80 °C mit 10000 bis 14000 UpM für 5 bis 15 Minuten);
b. Mischen des wie in Schritt (a) erhaltenen heißen Algenextrakts mit 2 bis 5 % oberflächenaktiven Mitteln bei einer Temperatur im Bereich von 60 bis 100 °C unter ständigem Rühren;
c. Stehenlassen des wie in Schritt (b) erhaltenen Inhalts für 1 bis 10 Stunden bei einer Temperatur im Bereich von 25 bis 35 °C, um feste Agarosemasse auszufällen;
d. Dekantieren der überstehenden Flüssigkeit und Waschen der Masse mit Wasser, um restliche oberflächenaktiven Mittel in dem Feststoff zu entfernen;
e. erneutes Auflösen der in Schritt (d) erhaltenen feuchten Masse in einer minimalen Menge an Wasser im Bereich von 7 bis 10 % Gew./Gew. Agaroseprodukt, und Behandeln mit einer minimalen Menge an Isopropanol, wobei das Verhältnis von Agarose-Sol zu Isopropanol 1:0,5 bis 1:1,5 Gew./Gew. beträgt, um die Agarose auszufällen;
f. Isolieren des festen Produkts und Trocknen in einem geeigneten Trockner, um Agarose-Pulver mit einer Maschenzahl im Bereich von 200 bis 300 zu erhalten.

2. Verfahren nach Anspruch 1, wobei die zur Herstellung des Extrakts verwendete Alge ausgewählt ist aus *Gracilaria dura* und *Gelidiella acerosa* aus indischen Gewässern, die von den Küsten in Gujarat und Tamil Nadu erhalten wurden.

3. Verfahren nach Anspruch 1, wobei der Extrakt nach einer Methode hergestellt wird, die die Schritte des Behandelns der trockenen Alge mit 20 bis 35 Teilen (Gew./Gew.) von 1 bis 15 % (Gew./Gew.) wässriger Natriumhydroxidlöung bei 25 bis 95 °C für 0,5 bis 5 Stunden, gefolgt von Waschen zur Einstellung des pH-Werts in den Bereich von 7 bis 9, dann Zufügen von entmineralisiertem Wasser zu der gewaschen Alge und Autoklavieren bei einer Temperatur im Bereich zwischen 100 und 125 °C für 1 bis 2,5 Stunden umfasst.

4. Verfahren nach Anspruch 1, wobei der Wasch- oder Dialysevorgang in Schritt (d) unter Umgebungsbedingungen durchgeführt wird, bis die Oberflächenspannung der Waschflüssigkeiten die gleiche wie diejenige von Wasser ist.

5. Verfahren nach Anspruch 1, wobei das oberflächenaktive Mittel aus verbrauchtem Extrakt und Waschflüssigkeiten recycelt wird.

6. Verfahren nach Anspruch 1, wobei die verwendeten oberflächenaktiven Mittel nur dann Ausflockung induzieren, wenn das Sulfatniveau in Agarose < 0,82 % (Gew./Gew.) liegt.

7. Verfahren nach Anspruch 1, wobei das Verfahren zur Reinigung jener Polysaccharide brauchbar ist, die entweder von sich aus wenig Sulfat enthalten und/oder chemisch oder biochemisch auf ein derart niedriges Niveau des Sulfatgehalts desulfatisiert werden können.

## Revendications

1. Procédé de purification d'agarose à partir d'extraits aqueux d'espèces d'algues de *Gracilaria* et/ou de *Gelidiella,* en utilisant des agents tensioactifs choisis parmi les agents tensioactifs non ioniques à base d'éthoxylate d'octylphénol et d'éthoxylate de nonyl-phénol, ledit procédé comprenant les étapes consistant à :
a. centrifuger l'extrait d'algues chaud et traité par un alcali (70-80°C) à 10 000-14 000 tours/min pendant 5-15 minutes ;
b. mélanger l'extrait d'algues chaud tel qu'obtenu dans l'étape (a) avec 2-5% d'agents tensioactifs à une température dans la plage de 60-100°C sous agitation continue ;
c. laisser reposer le contenu tel qu'obtenu dans l'étape (b) pendant 1-10 heures à une température dans la plage de 25-35°C afin de faire précipiter une masse solide d'agarose ;
d. décanter le liquide surnageant et laver ladite masse par de l'eau afin d'éliminer les agents tensioactifs résiduels dans le solide ;
e. resolubiliser la masse humide obtenue dans l'étape (d) dans une quantité minimale d'eau dans la plage allant de 7 à 10% p/p de produit d'agarose et traiter par une quantité minimale d'isopropanol, où le rapport du sol d'agarose à 1/isopropanol va de 1:0,5 à 1:1,5 p/p afin de précipiter l'agarose ;
f. isoler le produit solide et sécher dans un séchoir convenable afin d'obtenir une poudre d'agarose ayant une taille de mesh dans la plage allant de 200 à 300.

2. Procédé selon la revendication 1, dans lequel l'algue utilisée pour la préparation de l'extrait est choisie parmi *Gracilaria dura* et *Gelidiella acerosa* des eaux indiennes qui sont obtenues au niveau des côtes de Gujarat et de Tamil Nadu.

3. Procédé selon la revendication 1, dans lequel l'extrait a été préparé par une méthode comprenant les étapes consistant à traiter les algues sèches par 20-35 parties (p/p) d'une solution d'hydroxyde de sodium aqueuse à 1-15% (p/p) à 25-95°C pendant 0,5-5 heures, suivie d'un lavage afin d'ajuster le pH dans la plage de 7-9, puis ajouter de l'eau déminéralisée aux algues lavées et autoclaver à une température dans la plage de 100-125°C pendant 1-2,5 heures.

4. Procédé selon la revendication 1, dans lequel l'opération de lavage ou de dialyse dans l'étape (d) est effectuée dans des conditions ambiantes jusqu'à ce que la tension superficielle des eaux de lavage soit la même que celle de l'eau.

5. Procédé selon la revendication 1, dans lequel l'agent tensioactif est recyclé à partir de l'extrait usé et des eaux de lavage.

6. Procédé selon la revendication 1, dans lequel l'agent tensioactif usé n'induit une floculation que lorsque le taux de sulfate dans l'agarose est <0,82% (p/p).

7. Procédé selon la revendication 1, où ledit procédé est utile pour la purification des polysaccharides qui contiennent intrinsèquement peu de sulfate, ou bien peuvent être désulfatés chimiquement ou biochimiquement jusqu'à un tel niveau faible de taux de sulfate.
